# EUROPEAN PATENT SPECIFICATION

(11) **EP 1 773 804 B1**
(45) Date of publication and mention of the grant of the patent: **07.12.2016**
(21) Application number: 05772019.5
(22) Date of filing: 21.06.2005
(51) Int. Cl.: C07D 323/00

(54) **SLS FOR TOOLING APPLICATIONS**
SLS FÜR WERKZEUGANWENDUNGEN
FRITTAGE SELECTIF PAR LASER (SLS) POUR OUTILLAGE

(30) Priority: 23.06.2004 US 710163
(43) Date of publication of application: 18.04.2007
(73) Proprietor: The Boeing Company, Chicago, IL 60606-1596 (US)
(72) Inventor: MACKE, John, G., Jr., St. Louis, MO 63146 (US); BUCHHEIT, Jack, G., St. Charles, MO 63304 (US); SAMSON, Nancy, St. Charles, MO 63303 (US)
(74) Representative: Howson, Richard G.B.
(86) International application number: PCT/US2005/021779
(87) International publication number: WO 2006/007457

(56) References cited:
- EP-A- 0 703 036
- EP-A1- 0 968 776
- WO-A-01/28733
- WO-A-92/08592
- DE-A1- 10 051 893
- US-A- 5 216 616
- US-A- 5 304 329
- US-A- 6 136 948
- SUNG-MIN HUR, KYUNG-HYUN CHOI, SEOK-HEE LEE, POK-KEUN CHANG: "Determination of fabcrication orientation and packing in SLS process" JOURNAL OF MATERIALS PROCESSING TECHNOLOGY, no. 112, 2001, pages 236-243, XP002628671

## Description

### TECHNICAL FIELD

The present invention relates generally to tooling systems and processes and is more specifically related to the fabrication of tools through selective laser sintering.

### BACKGROUND ART

Traditional fabrication methods for tools having areas of contour have included fiberglass lay-ups on numerically controlled machined master models or facility details.

A manufacturing master model tool, or "master model", is a three-dimensional representation of a part or assembly. The master model controls physical features and shapes during the manufacture or "build" of assembly tools, thereby ensuring that parts and assemblies created using the master model fit together.

Traditional tool fabrication methods rely on a physical master model. These master models may be made from many different materials including: steel, aluminum, plaster, clay, and composites; and the selection of a specific material has been application dependent. Master models are usually hand-made and require skilled craftsmen to accurately capture the design intent. Once the master model exists, it may be used to duplicate tools.

The master model becomes the master definition for the contours and edges of a part pattern that the master model represents. The engineering and tool model definitions of those features become reference only.

Root cause analysis of issues within tool families associated with the master has required tool removal from production for tool fabrication coordination with the master. Tools must also be removed from production for master model coordination when repairing or replacing tool details. Further, the master must be stored and maintained for the life of the tool.

Master models are costly in that they require design, modeling and surfacing, programming, machine time, hand work, secondary fabrication operations, and inspection prior to use in tool fabrication.

In summary, although used for years, physical master models have inherent inefficiencies, including: they are costly and difficult to create, use, and maintain; there is a constant risk of damage or loss of the master model; and large master models are difficult and costly to store.

By way of further background, the field of rapid prototyping of parts has, in recent years, made significant improvements in providing high strength, high density parts for use in the design and pilot production of many useful objects. "Rapid prototyping" generally refers to the manufacture of objects directly from computer-aided-design (CAD) databases in an automated fashion, rather than from conventional machining of prototype objects following engineering drawings. As a result, time required to produce prototype parts from engineering designs has been reduced from several weeks to a matter of a few hours.

An example of a rapid prototyping technology is the selective laser sintering process (SLS) in which objects are fabricated from a laser-fusible powder. According to this process, a thin layer of powder is dispensed and then fused, melted, or sintered, by a laser beam directed to those portions of the powder corresponding to a cross-section of the object.

Conventional selective laser sintering systems position the laser beam by way of galvanometer-driven mirrors that deflect the laser beam. The deflection of the laser beam is controlled, in combination with modulation of the laser itself, for directing laser energy to those locations of the fusible powder layer corresponding to the cross-section of the object to be formed in that layer. The laser may be scanned across the powder in a raster fashion or a vector fashion.

In a number of applications, cross-sections of objects are formed in a powder layer by fusing powder along the outline of the cross-section in vector fashion either before or after a raster scan that fills the area within the vector-drawn outline. After the selective fusing of powder in a given layer, an additional layer of powder is then dispensed and the process repeated, with fused portions of later layers fusing to fused portions of previous layers (as appropriate for the object), until the object is completed.

Selective laser sintering has enabled the direct manufacture of three-dimensional objects of high resolution and dimensional accuracy from a variety of materials including polystyrene, NYLON, other plastics, and composite materials, such as polymer coated metals and ceramics. In addition, selective laser sintering may be used for the direct fabrication of molds from a CAD database representation of the object in the fabricated molds. Selective Laser Sintering has, however, not been generally available for tool manufacture because of SLS part size limitations, lack if robustness of SLS objects, and inherent limitations in the SLS process. DE 10051893 discloses components designed in a CAD system that are split into individual modules (7,8,9) which are then manufactured by first forming a base body (7a,8a,9a) which is placed in a laser sintering apparatus. A body (7b,8b,9b) is formed successively on the base body from a powder material by laser sintering, the body representing the difference between the base body and the final module. The resulting modules are assembled into a component.

The disadvantages associated with current tool manufacturing systems have made it apparent that a new and improved tooling system is needed. The new tooling system should reduce need for master models and should reduce time requirements and costs associated with tool manufacture. The new system should also apply SLS technology to tooling applications. The present invention is directed to these ends.

### SUMMARY OF THE INVENTION

In accordance with one example, a system for manufacturing a tool within a laser sintering system includes a chamber enclosing a sinter material. The laser sintering system grows or sinters the tool from the sinter material in response to signals from a controller, which generates the signals as a function of a predetermined tool design. A heat sink is positioned within the chamber to cool features of the tool thereby limiting warping of these features during sintering of the tool.

In an aspect of the invention there is provided a method for laser sintering a tool as claimed in claim 1.

In accordance with another example, a method for laser sintering a tool includes predetermining a position for a tool feature on a tool section. The method further includes predetermining an orientation of the tool section within a part chamber as a function of minimizing warping of the tool feature during sintering. The tool section is then sintered within the part chamber.

One advantage of the present invention is that use of Selective Laser Sintering can significantly reduce costs and cycle time associated with the tool fabrication process. An additional advantage is that tool features can be "grown" as represented by the three-dimensional computer model, thus eliminating the requirement for a master model or facility detail. The subsequent maintenance or storage of the master/facility is thereby also eliminated.

Still another advantage of the present invention is that the model remains the master definition of the tool, therefore root cause analysis or detail replacement may be done directly from the model definition. Secondary fabrication operations are further eliminated where features are "grown" per the three-dimensional solid model definition.

Additional advantages and features of the present invention will become apparent from the description that follows, and may be realized by means of the instrumentalities and combinations particularly pointed out in the appended claims, taken in conjunction with the accompanying drawings.

### BRIEF DESCRIPTION OF THE DRAWINGS

In order that the invention may be well understood, there will now be described some embodiments thereof, given by way of example, reference being made to the accompanying drawings, in which:
FIGURE 1 illustrates an example sintering system:
FIGURE 2 illustrates a perspective view of a tool, fabricated in the system of FIGURE 1;
FIGURE 3 illustrates an enlarged partial view of FIGURE 2; and
FIGURE 4 illustrates a logic flow diagram of a method for operating a sintering system in accordance with an embodiment of the present invention.

### DETAILED DESCRIPTION OF THE INVENTION

The present invention is illustrated with respect to a sintering system particularly suited to the aerospace field. The present invention is, however, applicable to various other uses that may require tooling or parts manufacture, as will be understood by one skilled in the art.

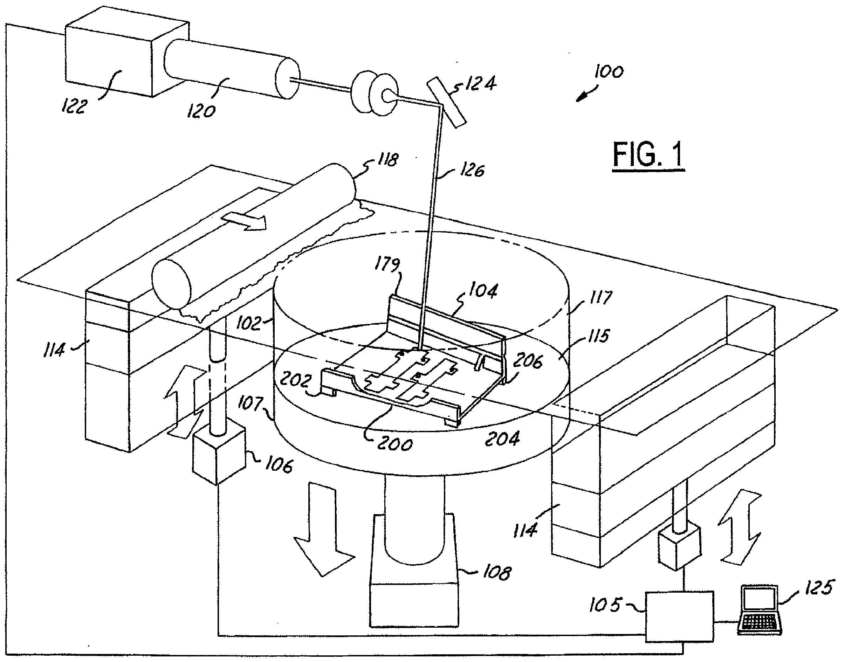

FIGURE 1 illustrates a selective laser sintering system 100 having a chamber 102 (the front doors and top of chamber 102 not shown in FIGURE 1, for purposes of clarity). The chamber 102 maintains the appropriate temperature and atmospheric composition (typically an inert atmosphere such as nitrogen) for the fabrication of a tool section 104. The system 100 typically operates in response to signals from a controller 105 controlling, for example, motors 106 and 108, pistons 114 and 107, roller 118, laser 120, and mirrors 124, all of which are discussed below. The controller 105 is typically controlled by a computer 125 or processor running; for example, a computer-aided design program (CAD) defining a cross-section of the tool section 102.

The system 100 is further adjusted and controlled through various control features, such as the addition of heat sinks, optimal objection orientations, and feature placements, which are detailed herein.

The chamber 102 encloses a powder sinter material that is delivered therein through a powder delivery system. The powder delivery system in system 100 includes feed piston 114, controlled by motor 106, moving upwardly and lifting a volume of powder into the chamber 102. Two powder feed and collection pistons 114 may be provided on either side of part piston 107, for purposes of efficient and flexible powder delivery. Part piston 107 is controlled by motor 108 for moving downwardly below the floor of chamber 102 (part cylinder or part chamber) by small amounts, for example 0.125 mm, thereby defining the thickness of each layer of powder undergoing processing.

The roller 118 is a counter-rotating roller that translates powder from feed piston 114 to target surface 115. Target surface 115, for purposes of the description herein, refers to the top surface of heat-fusible powder (including portions previously sintered, if present) disposed above part piston 107; the sintered and unsintered powder disposed on part piston 107 and enclosed by the chamber 102 will be referred to herein as the part bed 117. Another known powder delivery system feeds powder from above part piston 107, in front of a delivery apparatus such as a roller or scraper.

In the selective laser sintering system 100 of FIGURE 1, a laser beam is generated by the laser 120, and aimed at target surface 115 by way of a scanning system 122, generally including galvanometer-driven mirrors 124 deflecting the laser beam 126. The deflection of the laser beam 126 is controlled, in combination with modulation of laser 120, for directing laser energy to those locations of the fusible powder layer corresponding to the cross-section of the tool section 104 formed in that layer. The scanning system 122 may scan the laser beam across the powder in a raster-scan or vector-scan fashion. Alternately, cross-sections of tool sections 104 are also formed in a powder layer by scanning the laser beam 126 in a vector fashion along the outline of the cross-section in combination with a raster scan that "fills" the area within the vector-drawn outline.

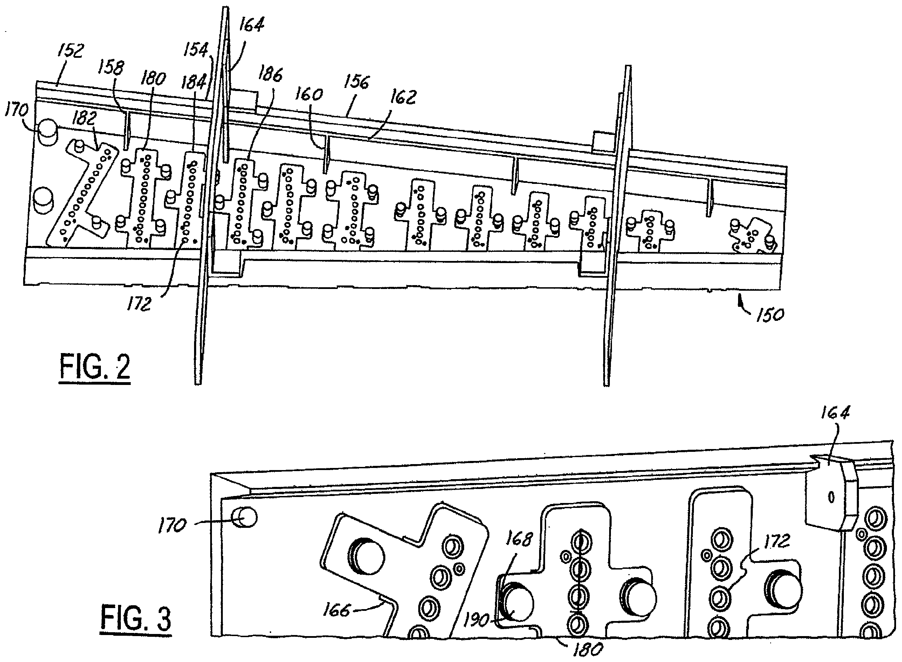

Referring to FIGURES 1, 2, and 3, a sample tool 150 formed through the SLS system 100 is illustrated. The tool 150 includes a plurality of large sections (first 152, second 154, and third 156) or alternately one large section. The sections 152 (alternate example of 104 in FIGURE 1), 154, 156 may be sintered simultaneously or consecutively.

During the sintering process, various features are molded into the large tool section or sections. Such features include steps and thickness variations 158, gussets 160, stiffeners 162, interfaces and coordination features for making interfaces 164, construction ball interfaces and coordination holes 170, trim of pocket and drill inserts 166, hole patterns 172, and holes 168 included in multiple details for interfacing hardware, such as detail 180. Important to note is that a first plurality of features, including a combination of the aforementioned features, may be sintered into the first section 152 and a second plurality of features, including a combination of the aforementioned features, may be sintered into the second section 154.

Individually contoured details, such as detail 180, which may also be considered sections of the tool for the purposes of the present invention, may be sintered separately from the main body of the tool 150, such that they may be easily replaced or replaceable or easily redesigned and incorporated in the tool 150. Alternate embodiments include a plurality of individual contoured details, such as 180, 182, 184, 186. Each of the contoured details includes holes, e.g. 168, such that a bolt 190 may bolt the detail 180 to a section 152, 154, or 156 of the tool 150.

The features, such as the gusset 160 and the stiffener 162 are, in one embodiment of the present invention, grown on the same side of the SLS tool 150. Growing (i.e. sintering) these features on the same side of the tool takes advantage of the sintering process because a feature grown at the beginning of a sintering operation has different properties than the same feature would when grown at the end of a sintering operation. Therefore, the first side 200 undergoing sintering includes all the tool features.

Alternate embodiments of the present invention include various tool features grown on either side of the tool 150 through various other methods developed in accordance with the present invention. One such method includes adding a heat sink 202, or a plurality of heat sinks 202, 204, 206 to various portions of the bed 117 such that different tool features may be cooled subsequent to sintering on the first section 152 or second section 154, thereby avoiding warping that is otherwise inherent in the sintering process. Alternately, a single large heat sink may be placed on one side such that all features cool at the same rate and immediately following the sintering operation.

A further aspect of the present invention includes separating contoured details and various tool aspects by a proximate amount such that warping between the features is limited and structural integrity of the features is maximized.

An alternate embodiment of the present invention includes designing in access features or buffer features 179 in areas where warping will occur during sintering such that these features may be removed when the sintering process is concluded. These buffer features 179 may be predetermined such that connection between them and the main body of the part facilitates detachment through a twisting off or breaking off procedure for the buffer feature 179.

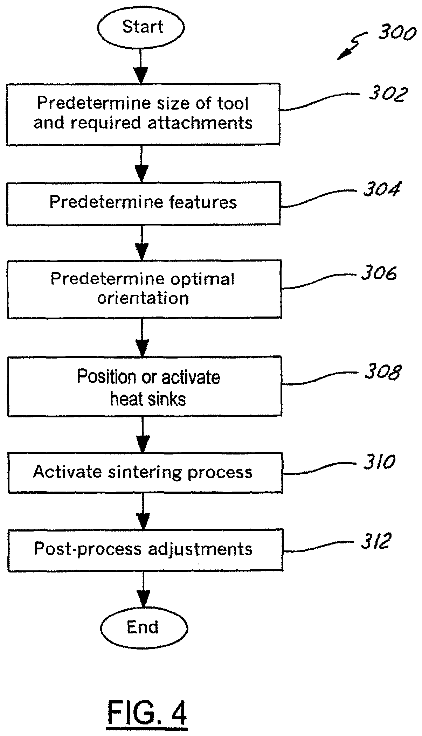

Referring to FIGURE 4, logic flow diagram 300 of the method for operating a SLS system is illustrated. Logic starts in operation block 302 where the size of the tool needed is predetermined and attachments required to generate that size of tool are also predetermined. In other words, if the tool requires several sections due to the limitations of the part cylinder 102, the tool is manufactured in a plurality of parts that are joined together through predetermined connectors that are sintered into the sections within the parts cylinder 102.

In operation block 304, the features, such as thickness variations 158, gussets 160, stiffeners 162, interfaces and coordination features 164, construction ball interface and coordination holes 170, trim of pockets and drill inserts 166 and holes 168 provided in details for interface hardware, such as screws, are all predetermined for the tool.

In operation block 306, optimal orientation of the SLS tool design within the parts cylinder is predetermined. In one embodiment of the present invention, this predetermination involves including all features of the tool 150 on the same side of the tool, thereby limiting warping on tool features in accordance with the present invention.

In operation block 308 heat sinks, such as 202, 204, or 206, are positioned in various parts of the parts cylinder 102 such that tool features may be cooled immediately following the sintering process and while the rest of the tool or tool components are being sintered, thereby minimizing warping of the tool features. Alternate embodiments include activating the heat sinks 202, 204, 206 or alternately inputting them into the parts cylinder 102 prior to sintering. Further alternate embodiments include a single heat sink, or a heat sink activating in various regions corresponding to tool features on the tool being sintered.

In operation block 310 the sintering process is activated, and the controller 105 activates the pistons 114, 117, the roller 118, the laser 120, and the mirrors 124. The pistons force sinter material upwards or in a direction of the powder leveling roller 118, which rolls the sinter powder such that it is evenly distributed as a top layer on the parts cylinder 102. The laser 120 is activated and a beam 126 is directed towards scanning gears, which may be controlled as a function of predetermined requirements made in operation block 302. During the sintering operations, the heat sinks 202, 204, 206 are activated for cooling various sintered portions of the tool 150 as they are sintered, and as other parts of the tool are being sintered such that warping is minimized. In alternate embodiments wherein a plurality of tool sections, such as a first and second tool section, are sintered collectively or successively, heat sinks may be included to cool various features of the second tool section as well.

In operation block 312, post-sintering process adjustments are conducted. These adjustments include removing warped portions that were deliberately warped such that tool features would not undergo typical warping associated with the sintering process. Further, post-process adjustments involve fitting together components or sections of the tool 150.

In operation, a method for laser sintering a tool includes predetermining a position for a first tool feature on a first section of the tool; predetermining an orientation of the first section of the tool within the part chamber as a function of minimizing warping of the first tool feature during sintering; activating a heat sink within a part chamber for limiting warping of the first tool feature; laser sintering the first section of the tool within the part chamber; predetermining a position for a second tool feature on a second section of the tool; predetermining an orientation of the second section of the tool within the part chamber as a function of minimizing warping of the second tool feature during sintering; laser sintering the second section of the tool; and coupling the second section to the first section.

## Claims

1. A method for laser sintering a tool comprising:
predetermining a position for a first tool feature on a first section of the tool;
predetermining an orientation of said first section of the tool within the part chamber (102) as a function of minimizing warping of said first tool feature during sintering;
activating a heat sink (202, 204, 206) within a part chamber for limiting warping of said first tool feature;
laser sintering said first section of the tool within said part chamber;
predetermining a position for a second tool feature on a second section of the tool;
predetermining an orientation of said second section of the tool within said part chamber as a function of minimizing warping of said second tool feature during sintering;
laser sintering said second section of the tool; and
coupling said second section to said first section;
the method further comprising:
predetermining a location of a buffer feature (179) in a close proximity to said first tool feature, the buffer feature positioned to undergo warping during sintering such that said first tool feature does not undergo warping during sintering; and
removing said buffer feature (179) from the tool following sintering of the tool.

2. The method of claim 1 further comprising predetermining positions of a plurality of tool features on said first section of the tool.

3. The method of claim 2, wherein predetermining said orientation of the tool within the part chamber (102) as a function of minimizing warping said tool features further comprises orienting the tool such that all of said tool features are on a same side of the tool.

4. The method of claim 1 further comprising predetermining positions of a plurality of tool features on said second section of the tool.

5. The method of claim 1 further comprising activating a plurality of heat sinks (202, 204, 206) at predetermined times within said part chamber for limiting warping of a plurality of predetermined tool features on either said first section or said second section.

6. The method of claim 1, wherein predetermining positions of said first tool feature further comprise predetermining a position for at least one of a step and thickness variation (158), a gusset (160), a stiffener (162), an interface and coordination feature for making interfaces (164), a construction ball interface, a coordination hole (170), a trim of pocket and drill insert (166), a hole pattern (172), or a hole for interfacing hardware (168).

7. The method of claim 1 further comprising activating a second heat sink within said part chamber (102) for limiting warping of said second tool feature.

8. The method of claims 1 or 7 further comprising:
cooling said first tool feature during sintering of said first tool section; and
cooling said second tool feature during sintering of said second tool section;

9. The method of claims 1 or 8 further comprising sintering a separate contour detail (180); and coupling said contour detail to said first section after said first section has been sintered.

10. The method of claim 9, wherein coupling said contour detail further comprises coupling said contour detail to said first section with a bolt.

11. The method of claim 1 or 8 further comprising sintering a plurality of separate contour details (180); and coupling said plurality of contour details to both said first section and said second section after the first and second sections have been sintered.

## Patentansprüche

1. Verfahren zum Lasersintern eines Werkzeugs, das beinhaltet:
Festlegen einer Position für ein erstes Werkzeugmerkmal an einem ersten Abschnitt des Werkzeugs;
Festlegen einer Ausrichtung des ersten Abschnitts des Werkzeugs in der Teilekammer (102) in Abhängigkeit des Minimierens von Verformungen des ersten Werkzeugmerkmals während des Sinterns;
Aktivieren einer Wärmesenke (202, 204, 206) in einer Teilekammer zum Begrenzen von Verformungen des ersten Werkzeugmerkmals;
Lasersintern des ersten Abschnitts des Werkzeugs in der Teilekammer;
Festlegen einer Position für ein zweites Werkzeugmerkmal an einem zweiten Abschnitt des Werkzeugs;
Festlegen einer Ausrichtung des zweiten Abschnitts des Werkzeugs in der Teilekammer in Abhängigkeit des Minimierens von Verformungen des zweiten Werkzeugmerkmals während des Sinterns;
Lasersintern des zweiten Abschnitts des Werkzeugs; und
Verbinden des zweiten Abschnitts mit dem ersten Abschnitt;
wobei das Verfahren des Weiteren beinhaltet:
Festlegen einer Stelle eines Puffermerkmals (179) in unmittelbarer Nähe zu dem ersten Werkzeugmerkmal, wobei das Puffermerkmal dazu positioniert ist, während des Sinterns Verformungen zu erfahren, so dass das erste Werkzeugmerkmal während des Sinterns keine Verformungen erfährt; und
Entfernen des Puffermerkmals (179) aus dem Werkzeug nach dem Sintern des Werkzeugs.

2. Verfahren nach Anspruch 1, das des Weiteren das Festlegen von Positionen einer Vielzahl von Werkzeugmerkmalen an dem ersten Abschnitt des Werkzeugs beinhaltet.

3. Verfahren nach Anspruch 2, wobei das Festlegen der Ausrichtung des Werkzeugs in der Teilekammer (102) in Abhängigkeit des Minimierens von Verformungen der Werkzeugmerkmale des Weiteren das Ausrichten des Werkzeugs derart beinhaltet, dass alle Werkzeugmerkmale auf derselben Seite des Werkzeugs liegen.

4. Verfahren nach Anspruch 1, das des Weiteren das Festlegen von Positionen einer Vielzahl von Werkzeugmerkmalen an dem zweiten Abschnitt des Werkzeugs beinhaltet.

5. Verfahren nach Anspruch 1, das des Weiteren das Aktivieren einer Vielzahl von Wärmesenken (202, 204, 206) zu vorgegebenen Zeitpunkten in der Teilekammer zum Begrenzen von Verformungen einer Vielzahl festgelegter Werkzeugmerkmale entweder an dem ersten Abschnitt oder dem zweiten Abschnitt beinhaltet.

6. Verfahren nach Anspruch 1, wobei das Festlegen von Positionen des ersten Werkzeugmerkmals des Weiteren das Festlegen einer Position für wenigstens eines einer Stufe und einer Dickenabweichung (158), eines Winkelstücks (160), einer Versteifung (162), eines Verbindungs- und Koordinierungsmerkmals zum Herstellen von Verbindungen (164), einer Konstruktionskugelverbindung, eines Koordinierungslochs (170), eines Aussparungsschneide- und Bohrereinsatzes (166), eines Lochmusters (172) oder eines Lochs zum Verbinden von Hardware (168) beinhaltet.

7. Verfahren nach Anspruch 1, das des Weiteren das Aktivieren einer zweiten Wärmesenke in der Teilekammer (102) zum Begrenzen von Verformungen des zweiten Werkzeugmerkmals beinhaltet.

8. Verfahren nach Anspruch 1 oder 7, das des Weiteren beinhaltet:
Kühlen des ersten Werkzeugmerkmals während des Sinterns des ersten Werkzeugabschnitts; und
Kühlen des zweiten Werkzeugmerkmals während des Sinterns des zweiten Werkzeugabschnitts.

9. Verfahren nach Anspruch 1 oder 8, das des Weiteren das Sintern eines separaten Profildetails (180) beinhaltet, und das Verbinden des Profildetails mit dem ersten Abschnitt, nachdem der erste Abschnitt gesintert worden ist.

10. Verfahren nach Anspruch 9, wobei das Verbinden des Profildetails des Weiteren das Verbinden des Profildetails mit dem ersten Abschnitt mittels einer Schraube beinhaltet.

11. Verfahren nach Anspruch 1 oder 8, das des Weiteren das Sintern einer Vielzahl separater Profildetails (180) beinhaltet, und das Verbinden der Vielzahl von Profildetails sowohl mit dem ersten Abschnitt als auch mit dem zweiten Abschnitt, nachdem der erste und der zweite Abschnitt gesintert worden sind.

## Revendications

1. Procédé de frittage au laser d'un outil comprenant :
prédéterminer une position pour une première caractéristique d'outil sur une première section de l'outil ;
prédéterminer une orientation de ladite première section de l'outil à l'intérieur de la chambre de pièce (102) en fonction de la minimisation du gauchissement de ladite première caractéristique d'outil pendant le frittage ;
activer un puits thermique (202, 204, 206) à l'intérieur d'une chambre de pièce pour limiter un gauchissement de ladite première caractéristique d'outil ;
fritter au laser ladite première section de l'outil à l'intérieur de ladite chambre de pièce ;
prédéterminer une position pour une seconde caractéristique d'outil sur une seconde section de l'outil ;
prédéterminer une orientation de ladite seconde section de l'outil à l'intérieur de ladite chambre de pièce en fonction de la minimisation du gauchissement de ladite seconde caractéristique d'outil pendant le frittage ;
fritter au laser ladite seconde section de l'outil ; et
coupler ladite seconde section à ladite première section ;
le procédé comprenant en outre:
prédéterminer un emplacement d'une caractéristique tampon (179) à proximité étroite de ladite première caractéristique d'outil, la caractéristique tampon étant positionnée pour subir un gauchissement pendant le frittage de telle sorte que ladite première caractéristique d'outil ne subit pas de gauchissement pendant le frittage ; et
retirer ladite caractéristique tampon (179) de l'outil après le frittage de l'outil.

2. Procédé selon la revendication 1, comprenant en outre prédéterminer des positions d'une pluralité de caractéristiques d'outil sur ladite première section de l'outil.

3. Procédé selon la revendication 2, dans lequel prédéterminer lesdites orientations de l'outil à l'intérieur de la chambre de pièce (102) en fonction d'une minimisation du gauchissement desdites caractéristiques d'outil comprend en outre orienter l'outil de telle sorte que l'ensemble desdites caractéristiques d'outil sont sur un même côté de l'outil.

4. Procédé selon la revendication 1, comprenant en outre prédéterminer des positions d'une pluralité de caractéristiques d'outil sur ladite seconde section de l'outil.

5. Procédé selon la revendication 1, comprenant en outre activer une pluralité de puits thermiques (202, 204, 206) à des temps prédéterminés à l'intérieur de ladite chambre de pièce pour limiter un gauchissement d'une pluralité de caractéristiques d'outil prédéterminées sur ladite première section ou ladite seconde section.

6. Procédé selon la revendication 1, dans lequel prédéterminer des positions de ladite première caractéristique d'outil comprend en outre prédéterminer une position pour au moins un parmi un gradin et variation d'épaisseur (158), un gousset (160), un raidisseur (162), une caractéristique d'interface et de coordination pour réaliser des interfaces (164), une interface de bille de construction, un trou de coordination (170), une garniture de poche et d'insert de perçage (166), un motif de trou (172) ou un trou pour matériel d'interface (168).

7. Procédé selon la revendication 1, comprenant en outre activer un second puits thermique à l'intérieur de ladite chambre de pièce (102) pour limiter un gauchissement de ladite seconde caractéristique d'outil.

8. Procédé selon les revendications 1 ou 7, comprenant en outre :
refroidir ladite première caractéristique d'outil pendant le frittage de ladite première section d'outil ; et
refroidir ladite seconde caractéristique d'outil pendant le frittage de ladite seconde section d'outil.

9. Procédé selon les revendications 1 ou 8, comprenant en outre fritter un détail de contour distinct (180) ; et coupler ledit détail de contour à ladite première section après que ladite première section a été frittée.

10. Procédé selon la revendication 9, dans lequel coupler ledit détail de contour comprend en outre coupler ledit détail de contour à ladite première section avec un boulon.

11. Procédé selon les revendications 1 ou 8, comprenant en outre fritter une pluralité de détails de contour distincts (180) ; et coupler ladite pluralité de détails de contour à la fois à ladite première section et à ladite seconde section après que les première et seconde sections ont été frittées.
